# EUROPÄISCHE PATENTSCHRIFT

(11) **EP 0 593 472 B1**
(45) Veröffentlichungstag und Bekanntmachung des Hinweises auf die Patenterteilung: **05.04.1995**
(21) Anmeldenummer: 91912647.4
(22) Anmeldetag: 08.07.1991
(51) Int. Cl.: H02M 7/797, B60L 11/18, H02J 7/02

(54) **VERFAHREN UND VORRICHTUNG ZUM BETRIEB EINES WECHSELRICHTERS EINES DREHSTROMANTRIEBS EINES ELEKTROAUTOS ALS BORDLADEGERÄT**
PROCESS AND DEVICE FOR OPERATING AS ON-BOARD CHARGING SET THE INVERSE RECTIFIER OF THE THREEPHASE CURRENT DRIVE OF AN ELECTRIC CAR
PROCEDE ET DISPOSITIF D'EXPLOITATION COMME GROUPE-CHARGEUR DE BORD DE L'ONDULEUR DE L'ENTRAINEMENT A COURANT TRIPHASE D'UNE VOITURE ELECTRIQUE

(43) Veröffentlichungstag der Anmeldung: 27.04.1994
(73) Patentinhaber: SIEMENS AKTIENGESELLSCHAFT, 80333 München (DE)
(72) Erfinder: PIEPENBREIER, Bernhard, D-8551 Hemhofen (DE); TÖLLE, Hans-Jürgen, D-8500 Nürnberg 90 (DE)
(86) Internationale Anmeldenummer: DE9100561
(87) Internationale Veröffentlichungsnummer: WO9301650

(56) Entgegenhaltungen:
- EP-A- 0 116 925
- DE-A- 3 104 965
- FR-A- 2 452 814
- US-A- 4 920 475
- PATENT ABSTRACTS OF JAPAN vol. 8, no. 166 (M-314)(1603) 2. August 1984 ; & JP-A-5 961 402
- PESC '85 RECORD, 24. Juni 1985, Toulouse, FR, Seiten 181-187 ; SCHLECHT : "Bipolar power flow in a DC/AC converter with only one high-frequency switch pair"

## Beschreibung

Die Erfindung bezieht sich auf ein Verfahren und eine Vorrichtung zum Betrieb eines Wechselrichters eines Drehstromantriebs eines Elektroautos als Bordladegerät.

Aus der BBC-Druckschrift D VK 125781 D (Sonderdruck aus BBC-Nachrichten Heft 10, 1981) mit dem Titel "Umweltfreundlicher Elektroantrieb für VW-Golf" ist ein Elektroantrieb bekannt. Ein derartiger Elektroantrieb enthält Energiespeichermodule, auch Fahrbatterie genannt, einen Elektrofahrmotor mit Getriebe, eine Fahrsteuerung und Ladewandler, eine Bordbatterie und einen Bordlader. Als Elektrofahrmotor ist eine fremderregte Gleichstrommaschine vorgesehen. Dieser Elektrofahrmotor, das Getriebe und ein Komponententräger mit Ankersteller, Feldsteller, Ladewandler, Elektronik und Lüfter bilden eine Kompakt-Antriebseinheit.

Aus dem Aufsatz "Neues Kraftpaket für umweltfreundliche Elektroautos" abgedruckt in der Zeitschrift ABB-Technik, 2/88, ist bekannt, daß Elektroautos auf ein möglichst dichtes Netz von Ladestationen angewiesen sind. Dieses Problem ist dadurch gelöst, daß zur Ausrüstung des Fahrzeugs ein Ladegerät gehört, wodurch das Elektrofahrzeug an jede Wechselstromsteckdose anschließbar ist. An einer 16-A-Steckdose läßt sich bei 220V eine Scheinleistung von 3,5kVA entnehmen.

Energieversorgungsunternehmen fordern jedoch netzfreundliche Verbraucher mit geringen Blind- und Verzerrungs-Leistungsbedarf. Beim Laden wird daher der Netzstrom geregelt. Im Gegensatz zu Bleibatterien genügt für die Hochenergiebatterie ein sehr einfaches Verfahren. Das Ladegerät lädt mit konstantem Strom und schaltet sich ab, wenn die Batteriespannung den Höchstwert erreicht hat. Das Verfahren erzielt einen Ladewirkungsgrad von über 90 %, da Teillastbereiche des Ladegeräts mit schlechtem Wirkungsgrad nicht vorkommen.

In der Zeitschrift "Brown Boverie Technik 5-85, Seiten 229 bis 234 ist der Aufbau eines Ladegerätes schematisch dargestellt. Da von Energieversorgungsunternehmen mehr und mehr netzfreundliche Verbraucher mit geringem Blind- und Verzerrungs-Leistungsbedarf gefordert werden, kann einem Wechselstromnetz nur mit einem Hochsetzsteller ein weitgehend sinusförmiger, oberschwingungsarmer Strom mit cos φ = 1 entnommen werden. Die gesamte Scheinleistung (3,5kVA) kann als Ladeleistung genutzt werden, wodurch sich eine beachtliche Verkürzung der Ladezeiten ergibt. Deshalb besteht ein Ladegerät aus einem Netzfilter mit nachgeschaltetem Gleichrichter, einem Hochsetzsteller mit nachgeschaltetem Kondensator, einem Wechselrichter mit ausgangsseitigem Transformator und einem ausgangsseitigem Gleichrichter. Der Hochsetzsteller ist dem eingangsseitigen Gleichrichter und der Wechselrichter ist dem Kondensator nachgeschaltet. Der ausgangsseitige Gleichrichter ist mit der Sekundärwicklung des Transformators verknüpft.

Der Hochsetzsteller sorgt dafür, daß die Spannung am Kondensator immer größer ist als der Scheitelwert der Netzspannung. Der Wechselrichter, der aus zwei Transistoren mit jeweils einer Freilaufdiode aufgebaut ist, taktet mit einer Taktfrequenz von beispielsweise 20kHz.

Da auch die Bordnetzbatterie während der Fahrt geladen werden muß, ist ein Ladewandler erforderlich. Mit dem Hochsetzsteller und dem Wechselrichter des Bordladers sowie einem zweiten Transformator bzw. Transformatorwicklung läßt sich auch der Ladewandler aufbauen. Da der Bordlader und der Ladewandler gleiche Komponenten aufweist, sind der Bordlader und der Ladewandler kombiniert worden. Das Bauvolumen dieses Kombinationsgerätes wird überwiegend vom Bordlader bestimmt, so daß eine Verringerung von Bauvolumen und damit die Platzersparnis nicht sehr groß ist.

Jedes Bordladegerät benötigt im Elektroauto einen angemessenen Platzpunkt. Ein gravierender Nachteil von Bordladegeräten ist jedoch darin zu sehen, daß das Zuladevolumen und -gewicht des Elektroautos in ungewünschter Weise beeinflußt wird.

Der Erfindung liegt nunmehr die Aufgabe zugrunde, ein Bordladegerät anzugeben, daß die aufgeführten Nachteile nicht aufweist.

Diese Aufgabe wird erfindungsgemäß durch die Verfahren und Vorrichtungen der Ansprüche 1 und 5 oder der Ansprüche 2 und 6 gelöst.

Dieser Erfindung liegt die Erkenntnis zugrunde, daß ein Wechselrichter eines Drehstromantriebs eines Elektroautos und ein Bordladegerät niemals gleichzeitig in Betrieb sein können bzw. dürfen. Da hier ein Elektroauto mit einem Drehstromantrieb, bestehend aus einem dreiphasigen Wechselrichter und einem Drehstrommotor, versehen ist, können die Komponenten bzw. die Brückenzweige dieses Wechselrichters funktionell zu einem Hochsetzsteller und einem Tiefsetzsteller geschaltet und betrieben werden. Dazu werden einige einfache Elemente, wie Schütze, und ein Programm "Ladebetrieb" in die vorhandene Steuerung und das vorhandene Fahrzeugmanagement hinzugefügt, wodurch der bereits an Bord des Elektrofahrzeug untergebrachte Wechselrichter des Drehstromantriebs einerseits im Fahrbetrieb den Drehstrommotor speist und im Ladebetrieb an eine Wechselstromsteckdose anschließbar ist und die Fahrbatterie lädt.

Da die funktionsmäßige Ausbildung des Wechselrichters zum Ladegerät einerseits als Hochsetzsteller geregelt wird, kann dem Wechselstromnetz ein weitgehend sinusförmiger, oberschwingungsarmer Strom mit cos φ = 1 entnommen werden, wodurch das Elektroauto gemäß der Forderung der Energieversorgungsunternehmen ein netzfreundlicher Verbraucher ist. Gleichzeitig wird dadurch eine höhere Ladeleistung erreicht. Dabei ist darauf hinzuweisen, daß an dem räumlichen Aufbau des Wechselrichters des Drehstromantriebs des Elektroautos nichts verändert wird.

Aus der BBC-Druckschrift D VK 400 76 D mit dem Titel "Vierquadrantensteller - eine netzfreundliche Einspeisung für Triebfahrzeuge mit Drehstromantrieb", Sonderdruck aus "Elektrische Bahnen", Jahrgang 45, Heft 6, 1974, ist eine Einspeiseschaltung bekannt. Eine derartige Einspeiseschaltung stellt eine konstante Gleichspannung mit geringen Oberschwingungen bereit, wobei der Riffelfaktor möglichst klein ist. Dem Wechselspannungsnetz (Einspeisenetz) wird möglichst nur Wirkleistung entnommen, d.h. der Leistungsfaktor ist groß. Der Aufwand für die Anlage in Gewicht, Volumen und Kosten soll möglichst gering sein. In dieser Druckschrift sind eine Zweiquadranten- und eine Vierquadranten-Ausführung des Stellers und ein Blockschaltbild der zur Vierquadrantenausführung gehörenden Regelung dargestellt.

Somit kann mit dem erfindungsgemäßen Verfahren und Vorrichtung ein Ladegerät für ein Elektroauto mit Drehstromantrieb bereit gestellt werden, ohne die aufgeführten Nachteile zu besitzen.

Vorteilhafte Ausgestaltungen der Vorrichtung zur Durchführung des erfindungsgemäßen Verfahrens sind den Unteransprüchen zu entnehmen.

Zur weiteren Erläuterung wird auf die Zeichnung Bezug genommen, in der zwei Ausführungsbeispiele nach der Erfindung schematisch veranschaulicht sind.
- FIG 1: zeigt eine bekannte Ausführungsform eines Drehstromantriebs eines Elektroautos,
- FIG 2: veranschaulicht eine erste erfindungsgemäße Ausführungsform des funktionell zusammengesetzten Ladegerätes und in
- FIG 3: ist eine zweite Ausführungsform des funktionell zusammengesetzten Ladegerätes dargestellt.

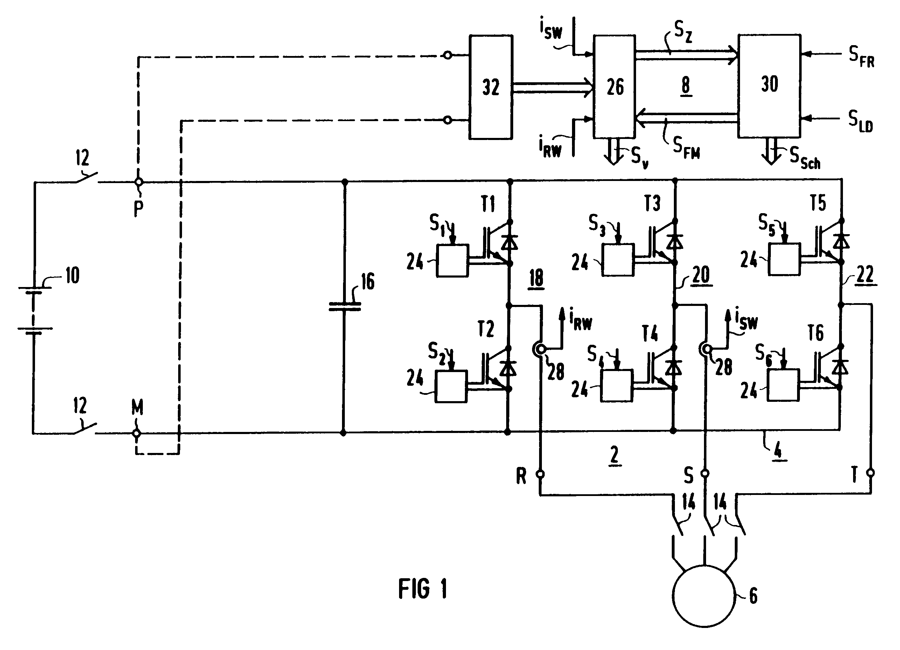

In der FIG 1 ist eine bekannte Ausführungsform eines Drehstromantriebs 2 eines Elektroautos dargestellt, wobei der Drehstromantrieb 2 aus einem Wechselrichter 4 und einem Drehstrommotor 6, insbesondere einer permanenterregten Synchronmaschine, besteht. Außerdem ist in dieser Figur eine zugehörige Regel- und Überwachungseinrichtung 8 in Form eines Blockschaltbildes schematisch veranschaulicht. Ferner ist noch eine Fahrbatterie 10 dargestellt, die mittels zweier Schütze 12 bzw. Kontakte mit den Gleichstromanschlüssen P und M des Wechselrichters 4 verbindbar ist. Der Drehstrommotor 6 ist ebenfalls mittels Schütze 14 mit den Wechselstromanschlüssen R,S und T des Wechselrichters 4 verbindbar.

Als Wechselrichter 4 ist ein Pulswechselrichter vorgesehen, der eingangsseitig einen Zwischenkreiskondensator 16 aufweist. Der Wechselrichter 4 enthält drei Brückenzweige 18,20 und 22, die identisch aufgebaut sind. Der Übersichtlichkeit halber sind pro Brückenzweig nur die Stromrichterventile T1 und T2 bzw. T3 und T4 bzw. T5 und T6 mit zugehöriger Ansteuerschaltung 24 dargestellt. Als Stromrichterventile T1 bis T6 können abschaltbare Leistungshalbleiter, beispielsweise Gate-Turn-Off-Thyristoren (GTO-Thyristoren) oder bipolare Transistoren, insbesondere Insulated-Gate-Turn-Off-Transistoren (IGBTs), verwendet werden. Die Auswahl eines entsprechenden Stromrichterventils wird von der Leistung des zu speisenden Drehstrommotor 6 und vom Preis beeinflußt. Jede Ansteuerschaltung 24 erhält ein korrespondierendes Schaltzustandssignal S₁ bzw.S₂ ... bzw. S₆. Zu jedem Stromrichterventil T1 bis T6 gehört auch noch eine Schutz- und Überwachungsschaltung, die wegen der Übersichtlichkeit nicht dargestellt sind, und deren Aufbau vom verwendeten Leistungshalbleiter abhängig ist. Die Schaltzustandssignale S_{ν} mit ν = 1-6 werden von einer bekannten Steuerung 26 erzeugt. Dazu werden dieser Steuerung 26 zwei Wechselrichter-Ausgangsströme i_{RW} und i_{SW} zugeführt, die mittels einer im Wechselrichterausgang R und S angeordneten Stromerfassung-Einrichtung 28 gemessen werden. Außerdem werden dieser Steuerung 26, die insbesondere ein Mikrocomputer ist, von einem Fahrzeugmanagement 30 beispielsweise ein Freigabesignal, ein Sperrsignal und Sollwerte, die zu einem Signal S_{FM} zusammengefaßt sind, zugeführt. Die Steuerung 26 erzeugt neben den Schaltzustandssignalen S_{ν} ebenfalls Meldesignale S_{Z}, die dem Fahrzeugmanagement 30 zugeführt werden. Eingangsseitig am Fahrzeugmanagement 30 stehen ein Fahrsignal S_{FR} und ein Ladesignal S_{LD} an, die in bekannter Weise vom Fahrer mechanisch betätigt werden. Für die Stromversorgung der Regel- und Überwachungseinrichtung 8, insbesondere der Steuerung 26, ist eine Stromversorgung 32 vorgesehen. Diese Stromversorgung 32 kann eingangsseitig beispielsweise mit den Gleichstromanschlüssen P und M des Wechselrichters 4 verknüpft sein, gekennzeichnet durch unterbrochene Verbindungslinien, oder aber mit einer nicht näher dargestellten Bordbatterie.

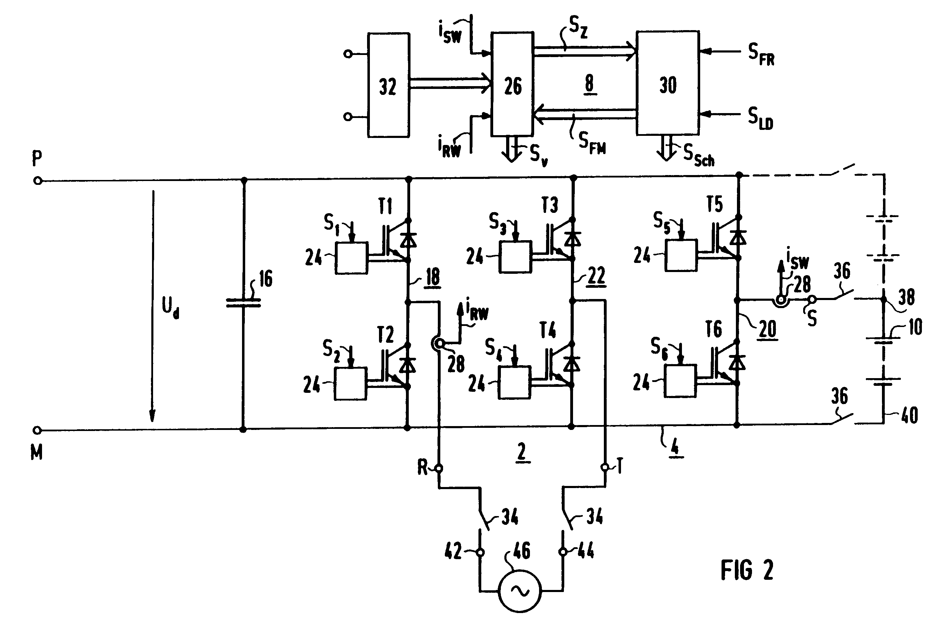

In FIG 2 ist eine erste Ausführungsform der Vorrichtung zur Durchführung des Verfahrens zum Betrieb eines Wechselrichters 4 eines Drehstromantriebs 2 eines Elektrofahrzeugs als Bordladegerät näher dargestellt. Dabei haben gleiche Komponenten in den Figuren 1 und 2 dieselben Bezugszeichen. Durch die Betriebsart "Ladebetrieb" generiert das Fahrzeugmanagement 30, aktiviert durch das Ladesignal S_{LD}, Schützsteuersignale S_{Sch} für die bereits erwähnten Schütze 12 und 14 und die hinzugefügten Schütze 34 und 36. Mittels dieser Schützsteuersignale S_{Sch} werden der Drehstrommotor 6 von den Wechselstromanschlüssen R,S und T und die Fahrbatterie 10 von den Gleichstromanschlüssen P und M des Wechselrichters 4 abgetrennt. Die Fahrbatterie 10 wird dann mittels der Schützsteuersignale S_{Sch} mit einem Anschluß 38 an den Wechselstromanschluß S und mit dem anderen Anschluß 40 an den Gleichstromanschluß M des Wechselrichters 4 angeschlossen. Der Anschluß 40 der Fahrbatterie 10 kann aber auch an den Gleichrichteranschluß P des Wechselrichters 4 angeschlossen werden, gekennzeichnet durch unterbrochene Linien.

Die Wechselstromanschlüsse R bzw.T des Wechselrichters 4 sind jeweils über einen Schütz 34 mit einem Einspeiseanschluß 42 bzw.44 verbunden. An diese Einspeiseanschlüsse 42 und 44 kann ein Wechselspannungsnetz 46 angeschlossen werden.

Durch diese Verschaltung der Einspeiseanschlüsse 42 und 44 und der Fahrbatterie 10 sind die Brückenzweige 18,20 und 22 des Wechselrichters 4 nun zueinander funktionell neu kombiniert worden. Die Brückenzweige 18 und 22 mit deren Wechselstromanschlüsse R und T bilden nun einen Vierquadranten-Steller, der als netzfreundliche Einspeiseschaltung für den Zwischenkreiskondensator 16 dient. Der Brückenzweig 20 des Wechselrichters 4 wird nun als Tiefsetzsteller bzw. als Ladechopper für die Fahrbatterie 10 benutzt. Bei der neuen Kombination der Brückenzweige 18,20 und 22 des Wechselrichters 4 ist darauf zu achten, daß die Funktionseinheit Hochsetzsteller bzw. Vierquadranten-Steller und die Funktionseinheit Tiefsetzsteller bzw. Ladechopper jeweils einen Brückenzweig 18 bzw.20 enthält, an dessen Ausgang eine Stromerfassungs-Einrichtung 28 angeordnet ist.

Mit der Aktivierung der Betriebsart "Ladebetrieb" mittels des Ladesignals S_{LD} wird in der Steuerung 26 ein Unterprogramm aktiviert, das nun Schaltzustandssignale S generiert, mit denen einerseits der Hochsetzsteller so geregelt wird, daß einerseits ein weitgehend sinusförmiger, oberschwingungsarmer Strom mit cos φ = 1 aus dem Wechselspannungsnetz 46 entnommen wird, und andererseits der Brückenzweig 20 derart als Tiefsetzsteller arbeitet, daß der Fahrbatterie 10 in Abhängigkeit einer Ladecharakteristik ein Ladestrom eingeprägt wird. Der Hochsetzsteller sorgt dafür, daß die Spannung U_{d} am Zwischenkreiskondensator 16 immer größer ist als der Scheitelwert der Netzspannung. Der Tiefsetzsteller wird aus dem Zwischenkreiskondensator 16 gespeist.

Durch dieses funktionell aus Komponenten des Wechselrichters 4 zusammengesetzes Bordladegerät ergeben sich folgende Vorteile:
- Leistungshalbleiter und Kühleinrichtung sind schon im Wechselrichter 4 vorhanden. Außer den Schaltgeräten, die die angegebenen Verbindungen herstellen und die evtl. notwendigen EMV-Filter, abhängig von den jeweiligen Vorschriften, sind keine weiteren Bauelemente für den Leistungsteil des Bordladegerätes erforderlich.
- Im allgemeinen sind die Leistungshalbleiter des Wechselrichters für Ströme ausgelegt, die die im Ladebetrieb fließenden Ströme um ein Vielfaches übertreffen. Dies wirkt sich günstig auf den Wirkungsgrad aus.
- Die Steuerelektronik des Wechselrichters 4 wird im allgemeinen mit Mikroprozessoren und/oder anderen programmierbaren Schaltkreisen aufgebaut sein. Daher muß für den Ladebetrieb lediglich eine andere Software ablaufen; es ist keine eigene Regelhardware für das Ladegerät erforderlich.
- Notwendige Istwert-Erfassungen (Ströme, Spannungen) sowie o.a. Hilfseinrichtungen sind ebenfalls schon im Wechselrichter 4 enthalten.

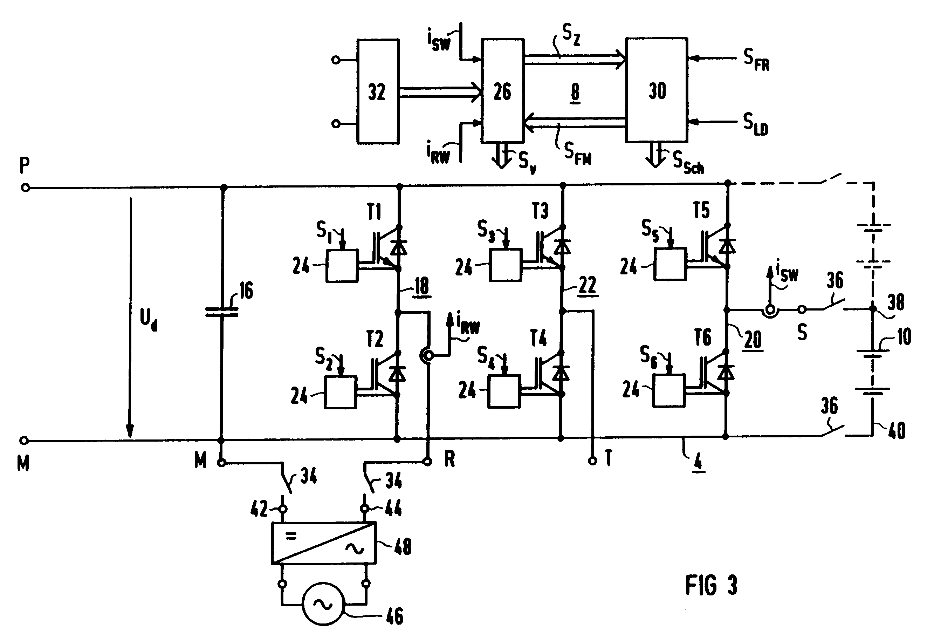

In FIG 3 ist eine zweite Ausführungsform der Vorrichtung zur Durchführung des Verfahrens zum Betrieb eines Wechselrichters 4 eines Drehstromantriebs 2 eines Elektrofahrzeugs als Bordladegerät näher dargestellt. Diese zweite Ausführungsform unterscheidet sich von der ersten Ausführungsform dadurch, daß nur der Brückenzweig 18 des Wechselrichters 4 als Hochsetzsteller verwendet wird. Außerdem ist der Einspeiseanschluß 42 über ein Schütz 34 mit dem Gleichstromanschluß M des Wechselrichters 4 verbindbar. An den Speiseanschlüssen 42 und 44 ist nun zunächst ein Netzgleichricher 48 angeschlossen, an dessen Eingang ein Wechselspannungsnetz 46 angeschlossen werden kann. Durch die Verwendung des Netzgleichrichters 48 vereinfacht sich der Hochsetzsteller und dessen Regelung erheblich.

Bei einer vorteilhaften zweiten Ausführungsform ist der Netzgleichrichter 48 integraler Bestandteil des Stromrichtergerätes für ein Elektroauto. Dieses Stromrichtergerät könnte ebenfalls noch beispielsweise einen Saugkreis, bestehend aus einer Reihenschaltung eines Kondensators und einer Induktivität, aufnehmen, der elektrisch parallel zum Zwischenkreiskondensator 16 schaltbar ist.

## Patentansprüche

1. Verfahren zum Betrieb eines Wechselrichters (4) eines Drehstromantriebs (2) eines Elektroautos als Bordladegerät, wobei während eines Ladebetriebs zwei Brückenzweige (18,22) dieses Wechselrichters (4) derart als Hochsetzsteller geregelt werden, daß in Abhängigkeit einer weitgehend sinusförmigen, oberschwingsarmen Stromeinspeisung mit cos φ = 1 eine Gleichspannung (U_{d}) einem Zwischenkreiskondensator (16) des Wechselrichters (4) eingeprägt wird und wobei ein weiterer Brückenzweig (20) dieses Wechselrichters (4) derart als Tiefsetzsteller geregelt wird, daß in Abhängigkeit einer Ladecharakteristik einer Fahrbatterie (10) des Elektroautos dieser ein Ladestrom aus dem Zwischenkreiskondensator (16) eingeprägt wird.

2. Verfahren zum Betrieb eines Wechselrichters (4) eines Drehstromantriebs (2) eines Elektroautos als Bordladegerät, wobei während eines Ladebetriebs ein Brückenzweig (18) dieses Wechselrichters (4) derart als Hochsetzsteller geregelt wird, daß in Abhängigkeit einer gleichgerichteten Einspeisung (48) eine Gleichspannung (U_{d}) einem Zwischenkreiskondensator (16) des Wechselrichters (4) eingeprägt wird, und wobei ein weiterer Brückenzweig (20) dieses Wechselrichters (4) derart als Tiefsetzsteller geregelt wird, daß in Abhängigkeit einer Ladecharakteristik einer Fahrbatterie (10) des Elektroautos dieser ein Ladestrom aus dem Zwischenkreiskondensator (16) eingeprägt wird.

3. Verfahren nach Anspruch 1 oder 2,
**dadurch gekennzeichnet,**
daß dieses Verfahren in Abhängigkeit eines Ladesignals (S_{LD}) aktiviert wird.

4. Verfahren nach Anspruch 3,
**dadurch gekennzeichnet,**
daß mit Generierung des Ladesignals (S_{LD}) einerseits der Drehstrommotor (6) des Drehstromantriebs (2) von den Wechselstromanschlüssen (R,S,T) und andererseits die Fahrbatterie (10) von den Gleichstromanschlüssen (P,M) des Wechselrichters (4) getrennt werden und daß diese Wechselstromanschlüsse (R,T;S) einerseits mit zwei Einspeiseanschlüssen (42,44) und andererseits mit einem Anschluß (38 bzw.40) der Fahrbatterie (10) verbunden werden, wobei der andere Anschluß (40 bzw.38) der Fahrbatterie (10) mit einem Gleichstromanschluß (P bzw.M) verbunden wird.

5. Vorrichtung zur Durchführung des Verfahrens nach Anspruch 1 mit einem Drehstromantrieb (2), bestehend aus einem Drehstrommotor (6) und einem Wechselrichter (4), wobei die Gleichstromanschlüsse (P,M) des Wechselsrichters (4) über einen Zwischenkreiskondensator (16) und Schütze (12) mit einer Fahrbatterie (10) und seine Wechselstromanschlüsse (R,S,T) über Schütze (14) mit dem Drehstrommotor (6) verbindbar sind, wobei in Abhängigkeit von Signalen (S_{FM}) eines Fahrzeugmanagements (30) und zweier gemessener Wechselrichter-Ausgangsströme (i_{RW},i_{SW}) mittels einer Steuerung (26) Schaltzustandssignale (S_{ν}) für den Wechselsrichter (4) generiert werden, **dadurch gekennzeichnet,** daß einerseits zwei Wechselstromanschlüsse (R,T) dieses Wechselrichters (4) über Schütze (34) mit zwei Einspeiseanschlüssen (42,44) und andererseits ein dritter Wechselstromanschluß (S) und ein Gleichstromanschluß (P bzw.M) des Wechselrichters (4) über Schütze (36) mit den Anschlüssen (38,40) der Fahrbatterie (10) verbindbar sind.

6. Vorrichtung zur Durchführung des Verfahrens nach Anspruch 2 mit einem Drehstromantrieb (2), bestehend aus einem Drehstrommotor (6) und einem Wechselrichter (4), wobei die Gleichstromanschlüsse (P,M) des Wechselrichters (4) über einen Zwischenkreiskondensator (16) und Schütze (12) mit einer Fahrbatterie (10) und seine Wechselstromanschlüsse (R,S,T) über Schütze (14) mit dem Drehstrommotor (6) verbindbar sind, wobei in Abhängigkeit von Signalen (S_{FM}) eines Fahrzeugmanagements (30) und zweier gemessener Wechselrichter-Ausgangsströme (i_{RW},i_{SW}) mittels einer Steuerung (26) Schaltzustandssignale (S_{ν}) für den Wechselrichter (4) generiert werden, **dadurch gekennzeichnet,** daß einerseits ein erster Wechselstromanschluß (R) und ein Gleichstromanschluß (M) dieses Wechselrichters (4) über Schütze (34) mit zwei Einspeiseanschlüssen (42,44) und andererseits ein dritter Wechselstromanschluß (S) und ein Gleichstromanschluß (P bzw.M) dieses Wechselrichters (4) über Schütze (36) mit den Anschlüssen (38,40) der Fahrbatterie (10) verbindbar sind.

7. Vorrichtung nach Anspruch 6,
**dadurch gekennzeichnet,**
daß eine einphasige Einspeisung über einen Netzgleichrichter (48) mit den Einspeiseanschlüssen (42,44) verbunden ist.

8. Vorrichtung nach Anspruch 7,
**dadurch gekennzeichnet,**
daß der Netzgleichrichter (48) integraler Bestandteil der Vorrichtung ist.

9. Vorrichtung nach Anspruch 5 oder 6,
**dadurch gekennzeichnet,**
daß ein Mikrocomputer für die Durchführung des Verfahrens vorgesehen ist.

10. Vorrichtung nach Anspruch 9,
**dadurch gekennzeichnet,**
daß der Mikrocomputer integraler Bestandteil der Steuerung (26) ist.

## Claims

1. Method of operating an inverter (4) of a three-phase drive (2) of an electric car as on-board charger, wherein, during a charging operation, two bridge arms (18, 22) of said inverter (4) are regulated as step-up converters in such a way that a direct voltage (U_{d}) is impressed on an intermediate-circuit capacitor (16) of the inverter (4) as a function of a largely sinusoidal, low-harmonic current supply having cos φ = 1 and wherein a further bridge arm (20) of said inverter (4) is regulated as a step-down converter in such a way that a charging current from the intermediate-circuit capacitor (16) is impressed on a drive battery (10) of the electric car as a function of a charging characteristic of the latter.

2. Method of operating an inverter (4) of a three-phase drive (2) of an electric car as on-board charging unit, wherein, during a charging operation, a bridge arm (18) of said inverter (4) is regulated as a step-up controller in such a way that a direct voltage (U_{d}) is impressed on an intermediate-circuit capacitor (16) of the inverter (4) as a function of a rectified supply (48) and wherein a further bridge arm (20) of said inverter (4) is regulated as a step-down converter in such a way that a charging current from the intermediate-circuit capacitor (16) is impressed on a drive battery (10) of the electric car as a function of a charging characteristic of the latter.

3. Method according to Claim 1 or 2, characterized in that said method is activated as a function of a charging signal (S_{LD}).

4. Method according to Claim 3, characterized in that, with the generation of the charging signal (S_{LD}), on the one hand, the three-phase motor (6) of the three-phase drive (2) is separated from the alternating-current terminals (R, S, T) and, on the other hand, the drive battery (10) is separated from the direct-current terminals (P, M) of the inverter (4) and in that said alternating-current terminals (R, T; S) are connected, on the one hand, to two supply terminals (42, 44) and, on the other hand, to a terminal (38 or 40) of the drive battery (10), the other terminal (40 or 38, respectively) of the drive battery (10) being connected to the direct-current terminal (P or M, respectively).

5. Device for carrying out the method according to Claim 1 having a three-phase drive (2) comprising a three-phase motor (6) and an inverter (4), the direct-current terminals (P, M) of the inverter (4) being connectable, via an intermediate-circuit capacitor (16) and contactors (12), to a drive battery (10) and its alternating-current terminals (R, S, T) being connectable, via contactors (14), to the three-phase motor (6), switching-state signals (S_{ν}) for the inverter (4) being generated by means of a control signal (26) as a function of signals (S_{FM}) of a vehicle management system (30) and of two measured inverter output currents (i_{RW}, i_{SW}), characterized in that, on the one hand, two alternating-current terminals (R, T) of said inverter (4) are connectable, via contactors (34), to two supply terminals (42, 44) and, on the other hand, a third alternating-current terminal (S) and a direct-current terminal (P or M) of the inverter (4) are connectable, via contactors (36), to the terminals (38, 40) of the drive battery (10).

6. Device for carrying out the method according to Claim 2 having a three-phase drive (2) comprising a three-phase motor (6) and an inverter (4), the direct-current terminals (P, M) of the inverter (4) being connectable, via an intermediate-circuit capacitor (16) and contactors (12), to a drive battery (10) and its alternating-current terminals (R, S, T) being connectable, via contactors (14), to the three-phase motor (6), switching-state signals (S_{ν}) for the inverter (4) being generated by means of a control system (26) as a function of signals (S_{FM}) of a vehicle management system (30) and of two measured inverter output currents (i_{RW}, i_{SW}), characterized in that, on the one hand, a first alternating-current terminal (R) and a direct-current terminal (M) of said inverter (4) are connectable, via contactors (34), to two supply terminals (42, 44) and, on the other hand, a third alternating-current terminal (S) and a direct-current terminal (P or M) of said inverter (4) are connectable, via contactors (36), to the terminals (38, 40) of the drive battery (10).

7. Device according to Claim 6, characterized in that a single-phase supply is connected to the supply terminals (42, 44) via a mains rectifier (48).

8. Device according to Claim 7, characterized in that the mains rectifier (48) is an integral component of the device.

9. Device according to Claim 5 or 6, characterized in that a microcomputer is provided for carrying out the method.

10. Device according to Claim 9, characterized in that the microcomputer is an integral component of the control system (26).

## Revendications

1. Procédé pour faire fonctionner un onduleur (4) d'un dispositif d'entraînement à courant triphasé (2) d'une automobile électrique, en tant que chargeur de bord, selon lequel, pendant l'opération de charge, deux branches (18,22) du pont de cet onduleur (4) sont réglées en tant que régulateur de marche à régime élevé de telle sorte qu'une tension continue (U_{d}) est injectée dans un condensateur (16) du circuit intermédiaire de l'onduleur (4), en fonction d'une alimentation en courant dans une large mesure sinusoïdale et présentant peu d'harmoniques avec cosφ=1, et selon lequel une autre branche (20) du pont de cet onduleur (4) est réglée en tant que régulateur de marche à régime faible de telle sorte qu'un courant de charge est injecté à partir du condensateur (16) du circuit intermédiaire dans une batterie de marche (10) de l'automobile électrique, en fonction d'une caractéristique de charge de cette batterie.

2. Procédé pour faire fonctionner un onduleur (4) d'un dispositif d'entraînement à courant triphasé (2) d'une automobile électrique, en tant que chargeur de bord, et selon lequel, pendant une opération de charge, une branche (18) du pont de cet onduleur (4) est réglée en tant que régulateur de marche à régime élevé, de telle sorte qu'une tension continue (U_{d}) est injectée dans un condensateur (16) du circuit intermédiaire de l'onduleur (4) en fonction d'une alimentation redressée (48), et selon lequel une autre branche (20) du pont de cet onduleur (4) est réglée en tant que régulateur de marche à régime faible de telle sorte qu'un courant de charge est injecté à partir du condensateur (16) du circuit intermédiaire dans une batterie de marche (10) de l'automobile électrique, en fonction d'une caractéristique de charge de cette batterie.

3. Procédé suivant la revendication 1 ou 2, caractérisé par le fait que ce procédé est activé en fonction d'un signal de charge (S_{LD}).

4. Procédé suivant la revendication 3, caractérisé par le fait que lors de la production du signal de charge (S_{LD}), d'une part, le moteur à courant triphasé (6) du dispositif d'entraînement à courant triphasé (2) est séparé des bornes (R,S,T) d'alimentation en courant alternatif et, d'autre part, la batterie de marche (10) est séparée des bornes (P,M) d'alimentation en courant continu de l'onduleur (4), et que ces bornes (R,T;S) d'alimentation en courant alternatif sont reliées, d'une part, à deux bornes d'alimentation (42,44) et, d'autre part, à une borne (38 ou 40) de la batterie de marche (10), l'autre borne (40 ou 38) de la batterie de marche (10) étant reliée à une borne (P ou M) d'alimentation en courant continu.

5. Dispositif pour la mise en oeuvre du procédé selon la revendication 1 comportant un dispositif d'entraînement à courant triphasé (2), constitué par un moteur à courant triphasé (6) et par un onduleur (4), et dans lequel les bornes (P,M) d'alimentation en courant continu de l'onduleur (4) peuvent être reliées, par l'intermédiaire d'un condensateur (16) du circuit intermédiaire et d'un contacteur (12), à une batterie de marche (10), tandis que les bornes (R,S,T) d'alimentation en courant alternatif de l'onduleur peuvent être reliées par l'intermédiaire de contacteurs (14) au moteur à courant triphasé (6), et dans lequel des signaux d'état de commutation (S_{ν}) pour l'onduleur (4) sont produits en fonction de signaux (S_{FM}) d'une unité (30) de conduite du véhicule et de deux courants de sortie mesurés (i_{RW},i_{SW}) de l'onduleur, par l'intermédiaire d'une unité de commande (26), caractérisé par le fait que, d'une part, deux bornes (R,T) d'alimentation en courant continu de cet onduleur (4) peuvent être reliées par l'intermédiaire de contacteurs (34) à deux bornes d'alimentation (42,44), et, d'autre part, une troisième borne (S) d'alimentation en courant alternatif et une borne (P ou M) d'alimentation en courant continu de l'onduleur (4) peuvent être reliées par l'intermédiaire de contacteurs (36) aux bornes (38,40) de la batterie de marche (10).

6. Dispositif pour la mise en oeuvre du procédé suivant la revendication 2, comportant un dispositif d'entraînement à courant triphasé (2), constitué par un moteur à courant triphasé (6) et par un onduleur (4), et dans lequel les bornes (P,M) d'alimentation en courant continu de l'onduleur (4) peuvent être reliées par l'intermédiaire d'un condensateur (16) du circuit intermédiaire et d'un contacteur (12) à une batterie de marche (10), tandis que les bornes (R,S,T) d'alimentation en courant alternatif de l'onduleur peuvent être reliées, par l'intermédiaire de contacteurs (14), au moteur à courant triphasé (6), et dans lequel des signaux d'état de commutation (S_{ν}) pour l'onduleur (4) sont produits en fonction de signaux (S_{FM}) d'une unité (30) de conduite du véhicule et de deux courants de sortie mesurés (i_{RW},i_{SW}) de l'onduleur, par l'intermédiaire d'une unité de commande (26), caractérisé par le fait que, d'une part, une première borne (R) d'alimentation en courant alternatif et une borne (M) d'alimentation en courant continu de cet onduleur (4) peuvent être reliées par l'intermédiaire de contacteurs (34) à deux bornes d'alimentation (42,44) et que, d'autre part, une troisième borne (S) d'alimentation en courant alternatif et une borne (P ou M) d'alimentation en courant continu de cet onduleur (4) peuvent être reliées, par l'intermédiaire de contacteurs (36), aux bornes (38,40) de la batterie de marche (10).

7. Dispositif suivant la revendication 6, caractérisé par le fait qu'une alimentation monophasée est reliée par l'intermédiaire d'un redresseur (48) du réseau aux bornes d'alimentation (42,44).

8. Dispositif suivant la revendication 7, caractérisé par le fait que le redresseur (48) du réseau fait partie intégrante du dispositif.

9. Dispositif suivant la revendication 5 ou 6, caractérisé par le fait qu'un micro-ordinateur est prévu pour la mise en oeuvre du procédé.

10. Dispositif suivant la revendication 9, caractérisé par le fait que le micro-ordinateur fait partie intégrante de l'unité de commande (26).
